# EUROPEAN PATENT APPLICATION

(11) **EP 4 141 503 A1**
(43) Date of publication of application: **01.03.2023**
(21) Application number: 20931977.1
(22) Date of filing: 25.12.2020
(51) Int. Cl.: G02B 6/36

(54) **CLEANING TOOL FOR OPTICAL CONNECTOR**

(30) Priority: 20.04.2020 JP 2020074615
(71) Applicant: NTT Advanced Technology Corporation, Tokyo 163-1436 (JP)
(72) Inventor: HASHIMOTO, Etsu, Tokyo 163-1436 (JP); ANDO, Kazutoshi, Tokyo 163-1436 (JP); KAMOUCHI, Terumasa, Tokyo 163-1436 (JP)
(74) Representative: Samson & Partner Patentanwälte mbB
(86) International application number: PCT/JP2020/048804
(87) International publication number: WO 2021/215053

(57) **Abstract**

An optical connector cleaning tool includes a tip (44) for cleaning in a distal end portion. The tip (44) has a distal end face (51) in which a delivery hole (53) and a winding hole (54) for a cleaning medium are formed, and has an outer circumferential surface (52). The distal end face (51) has a first inclined surface (56) and a second inclined surface (57) forming the distal end portion of the tip (44) into a mountain shape in cross section, and has a convex curved surface (58) for connecting them to the outer circumferential surface (52). The first inclined surface (56) crosses an axis of the tip (44), and inclines at an angle smaller than an inclination angle of a distal end face of an APC connector. The second inclined surface (57) is formed such that an offset line (61) (a ridgeline) at the distal end of the tip (44) is positioned between the axis of the tip (44) and the winding hole (54), and inclines at an angle equal to or larger than the inclination angle of the distal end face of the APC connector. The convex curved surface (58) inclines at an angle equal to or larger than the inclination angle of the distal end face of the APC connector. This makes it possible to provide an optical connector cleaning tool capable of properly cleaning both a PC connector and an APC connector without using a rotation mechanism for rotating a tip.

## Description

### Technical Field

The present invention relates to an optical connector cleaning tool including a cleaning tip for pushing a cleaning medium against the distal end face of an optical fiber.

### Background Art

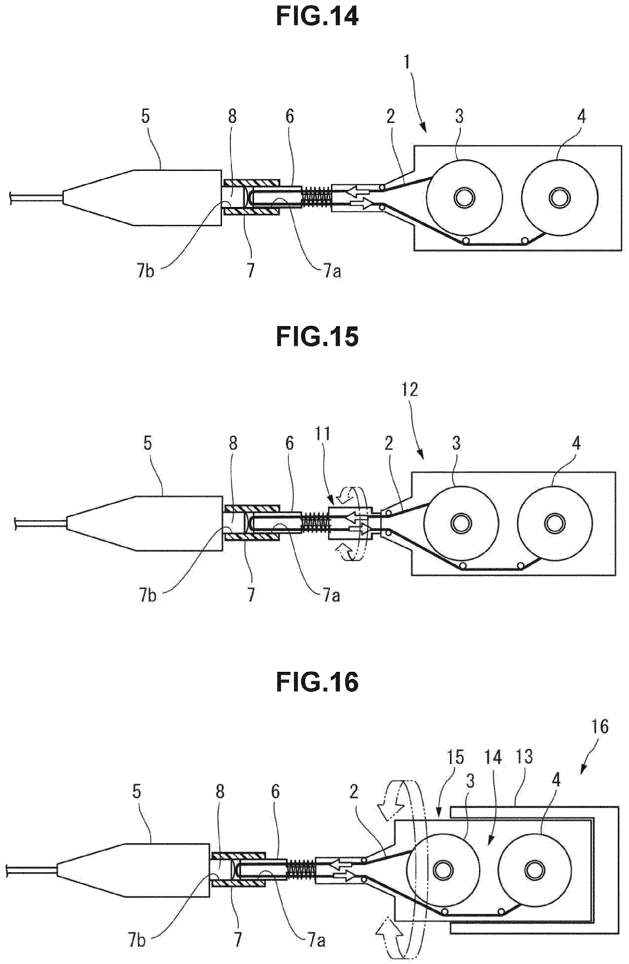

As a conventional optical connector cleaning tool, a pen-type cleaner which a worker uses by holding it in his or her hand is known. Commercially available pen-type cleaners for an optical connector include a cleaner having a rotation mechanism and a cleaner having no rotation mechanism. First, a cleaning method when using a simple pen-type cleaner using a structure having no rotation mechanism shown in Fig. 14 will be explained.

A pen-type cleaner 1 shown in Fig. 14 incorporates a supply bobbin 3 on which a cleaning medium 2 indicated by the thick line in Fig. 14 is wound, and a take-up bobbin 4 for winding up the cleaning medium 2. A bundle of treads, a narrow fabric, or the like is used as the cleaning medium 2. The take-up bobbin 4 winds up the cleaning medium 2 when manually rotated or when rotated by using a force that pushes the cleaner 1 against an optical connector during cleaning.

The cleaner 1 has a narrow projecting portion 6 that comes in contact with a cleaning target surface of an optical connector 5. The narrow projecting portion 6 is so formed as to expose the cleaning medium 2 at the distal end thereof. When inserted into a hole 7a of an optical connector adapter 7, the narrow projecting portion 6 faces the distal end face (a cleaning target surface) of a ferrule 8 of the optical connector 5 inserted into a hole 7b. Dirt on the cleaning target surface is wiped off by winding up the cleaning medium 2 in a state in which the cleaning medium 2 exposed to the narrow projecting portion 6 is in contact with the cleaning target surface.

As the commercially available cleaner 1 having the structure as described above, a single-core connector cleaner and a multi-core connector cleaner are available. A bundle of threads formed by microfibers is mainly used as the cleaning medium 2 of the single-core connector cleaner. A narrow fabric woven by microfibers is used as the cleaning medium 2 of the multi-core connector cleaner.

Since the structure of the cleaner 1 having no rotation mechanism is simple, there is an advantage that the number of parts is small. However, the cleaner 1 has a big problem as a single-core connector cleaner. This problem arises when cleaning an APC (Angled Physical Contact) connector in which the distal end is obliquely cut at an angle of 8° in order to improve the return loss characteristic.

When cleaning the APC connector, a gap is sometimes formed between the cleaning medium 2 and the cleaning target surface, depending on the relative positions of a direction in which the cleaning medium 2 is pulled and the direction of the inclined surface of the APC connector. As a consequence, incomplete wiping occurs in a specific relative position. This can be prevented by aligning the cleaner 1 and the APC connector before cleaning, but the addition of this aligning work worsens the usability. On the other hand, when cleaning the multi-core connector, this problem does not arise because cleaning is always performed with a unique positional relationship by using the key of the optical connector.

A cleaner having a rotation mechanism can solve this problem. The following two types of cleaners are commercially available in accordance with the configurations of the rotation mechanisms. As shown Fig. 15, one is a cleaner 12 including a rotation mechanism 11 in the narrow projecting portion 6, and One-Click° manufactured by Fujikura is famous. The other is, as shown in Fig. 16, a cleaner 16 in which a cleaner mechanism 14 is accommodated in a fixing grip 13 and a rotation mechanism 15 rotates the whole cleaner mechanism 14. NEOCLEAN-E^{®} manufactured by the present applicant is this type.

When using the cleaners 12 and 16 having these rotation mechanisms, uneven cleaning hardly occurs even when wiping the APC connector because the relative positions of the optical connector 5 and the cleaner (the narrow projecting portion 6) change during cleaning. However, the addition of the rotating function complicates the structure compared to the cleaner 1 having no rotation mechanism.

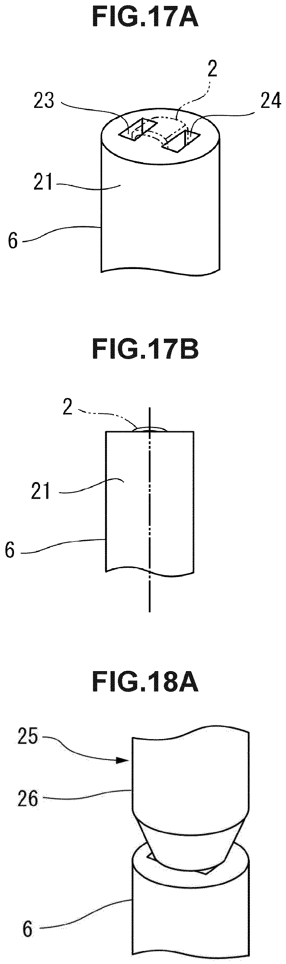

The distal end shape of the narrow projecting portion (to be called a tip hereinafter) 6 of the conventional cleaners 1, 12, and 16 will be explained below. The tip 6 shown in Figs. 17A and 17B has the most primitive shape among others to be used in the single-core cleaner, and has a structure in which two holes for passing a bundle of threads as the cleaning medium 2 are formed in a cylinder 21 having almost the same diameter as that of the ferrule of the single-core connector. These holes are a delivery hole 23 from which the cleaning medium 2 is delivered, and a winding hole 24 into which the cleaning medium 2 is returned. Fig. 17A is a perspective view showing the tip 6 of the conventional cleaner, and Fig. 17B is a side view of the tip 6 of the conventional cleaner.

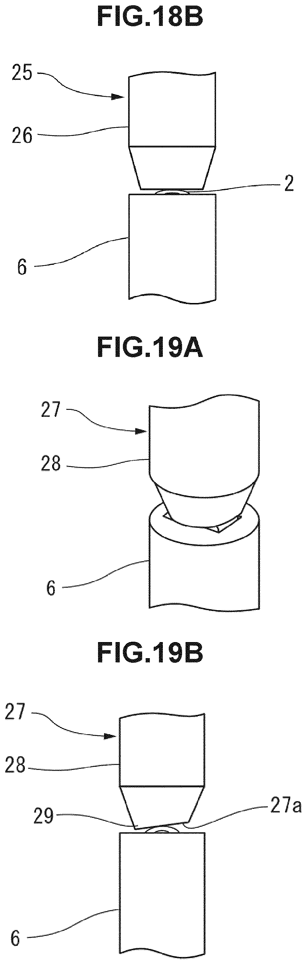

The reason why the APC connector cannot be wiped properly will be explained in detail below by taking the tip 6 as an example. Figs. 18A and 18B illustrate an example in which a PC (Physical Contact) connector 25 having a flat distal end is wiped by using the tip 6. Fig. 18A is a perspective view showing the state of cleaning of the PC connector 25, and Fig. 18B is a side view showing the state of cleaning of the PC connector 25. In Figs. 18A and 18B, reference numeral 26 denotes a ferrule in which the distal end of the PC connector 25 has a flat surface.

The end face of the PC connector 25 always parallelly abuts against the distal end face of the tip 6 regardless of the direction of the connector, so the result of cleaning is independent of the direction of the connector. However, when the APC connector having the end face cut at an angle of 8° is wiped as shown in Figs. 19A and 19B, the result of cleaning changes as follows. Figs. 19A and 19B are views showing the state in which an APC connector 27 is wiped by using the same tip 6 as shown in Figs. 18A and 18B. Fig. 19A is a perspective view showing the state of cleaning, and Fig. 19B is a side view showing the state of cleaning. In Figs. 19A and 19B, reference numeral 28 denotes a ferrule in which a distal end face 27a of an APC connector 27 inclines at an angle of 8°.

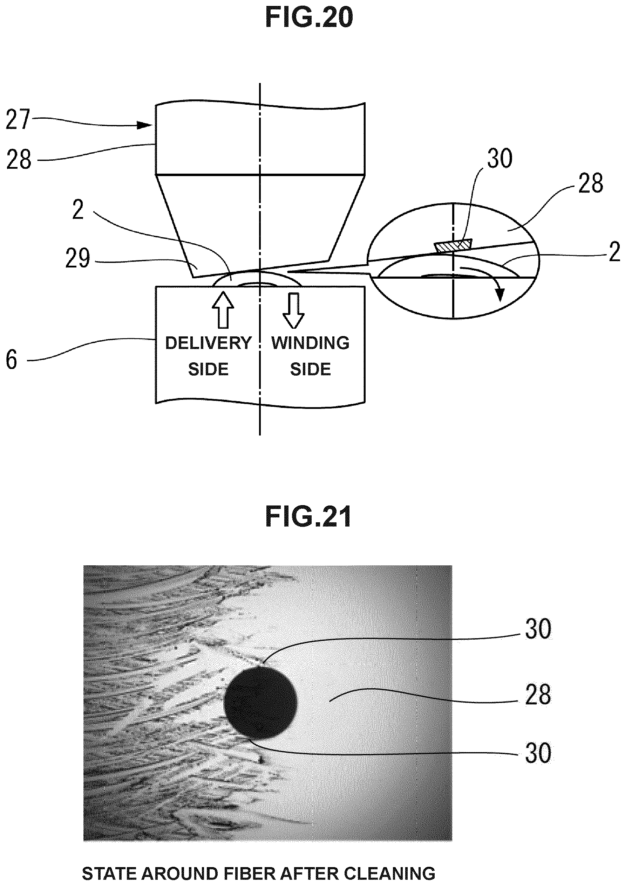

As can be apparent from the side view of Fig. 19B, the tip 6 abuts against the projecting side (to be called a projecting portion 29 hereinafter) of the APC connector 27, so a fiber central portion (a central portion of the ferrule 28) floats. However, the bundle of threads as the cleaning medium 2 has a measurable thickness and also has flexibility. If a slight gap exists, therefore, the cleaning medium 2 can enter the gap and come in contact with the connector end face 27a. Accordingly, the cleaning performance does not largely deteriorate if there is a slight gap. A big problem arises when the delivery hole 23 for delivering the cleaning medium 2 and the projecting portion 29 are positioned on the same side (to be called a delivery side hereinafter). Fig. 20 shows this state.

In the state shown in Fig. 20, the bundle of threads (the cleaning medium 2) is pulled toward the winding side as it is pressed between the tip 6 and the projecting portion 29 on the delivery side. Since the bundle of threads flattens, a gap is formed between the APC connector 27 and the bundle of threads. As shown in Fig. 21, therefore, a large amount of unwiped portions 30 are formed around a fiber (a black circle in the center of Fig. 21).

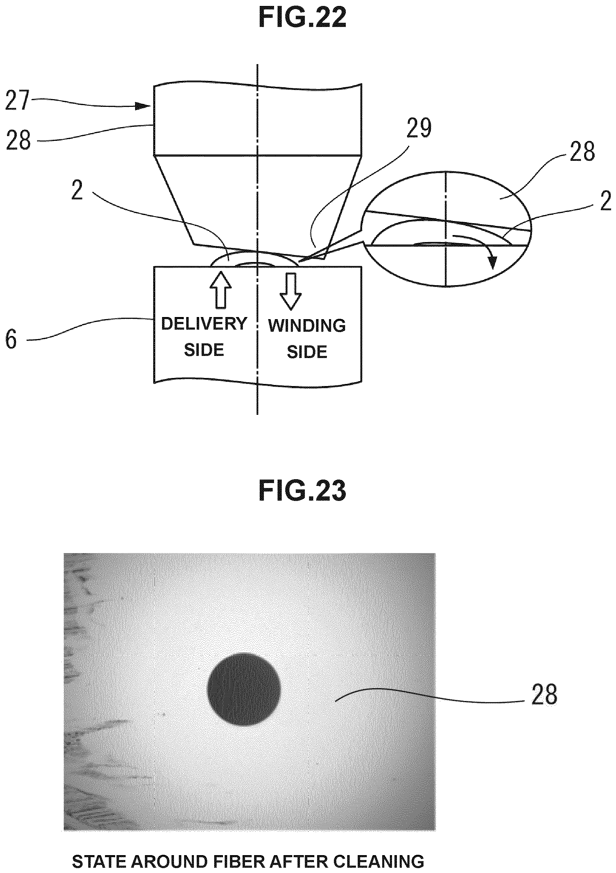

By contrast, when the projecting portion 29 of the APC connector 27 faces the winding side, as shown in Fig. 22, the bundle of threads is pressed toward the winding side but is not pulled by the delivery side. Since the bundle of threads does not flatten, no gap is formed between the bundle of threads and the fiber, so portions around the fiber can properly be cleaned as shown in Fig. 23. No unwiped portions 30 exist around the black circle in the center of Fig. 23.

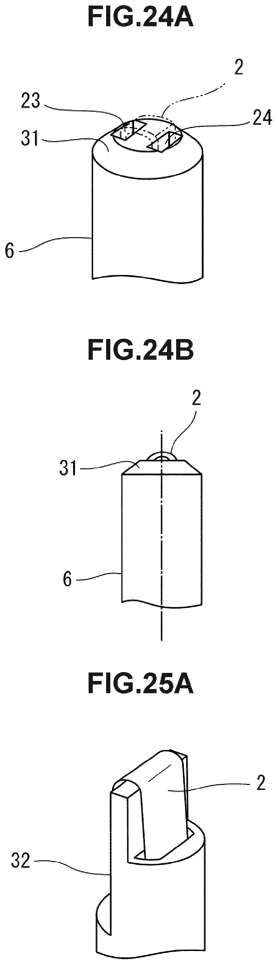

The shape of the tip 6 often adopted in commercially available cleaners regardless of the presence/absence of the rotation mechanism is a shape in which an edge surface 31 is formed as shown in Figs. 24A and 24B around the distal end of the tip 6 shown in Fig. 17. Fig. 24A is a perspective view of the tip 6, and Fig. 24B is a side view of the tip 6. The main purpose of the edge surface 31 shown in Figs. 24A and 24B is to facilitate insertion into the sleeve (the holes 7a and 7b) of the optical connector adapter 7 (see Fig. 14), so the edge surface 31 is not formed by taking account of the APC connector 27. That is, in the APC connector 27 in which the ferrule 8 has an outer diameter of 2.5 mm, the distal end diameter of the inclined portion is about 800 µm, and the distance between the holes for threads (the delivery hole 23 and the winding hole 24) formed in the tip 6 is nearly 1 mm in many cases. Even when the edge surface 31 is formed, therefore, the projecting portion 29 abuts against the tip 6 inside the edge surface 31.

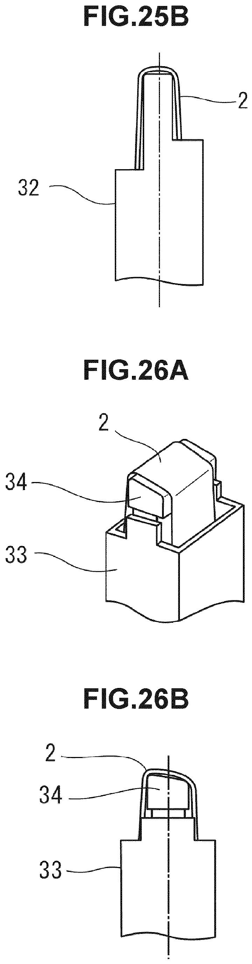

A tip usable for both the PC connector 25 and the APC connector 27 also exists. A tip 32 shown in Figs. 25A and 25B is adopted in the cleaner 12 equipped with the rotation mechanism, and the cleaning medium 2 is a very narrow fabric having a width of about 1 mm. Fig. 25A is a perspective view of the tip 32, and Fig. 25B is a side view of the tip 32. The distal end portion of the tip 32 is formed into a flat plate shape, and a fabric having a width covering the connector distal end linearly abuts against the connector end face. The cleaning medium 2 formed by the very narrow fabric comes in contact with the connector end face not by a plane but by a line. This reduces uneven wiping caused by the inclination of the connector end face of the APC connector 27. In addition, since the fabric is thick, no gap is formed even when the connector end face of the APC connector 27 abuts against the tip 32 in a state in which the connector end face inclines at an angle of about 8°. This makes it possible to clean the PC connector 25 and the APC connector 27 without any problem. The tip 32 aims to clean the whole area of the connector end face by utilizing the width of the fabric, and is based on the premise that the rotation mechanism is used. This rotation changes the linear contact surface into a circular surface covering the whole area of the connector end face, thereby implementing full-surface wiping. Since the distal end is also formed into a thin flat shape in order to increase the width of the fabric, only a portion of the connector end face can be cleaned without rotation.

A tip 33 shown in Figs. 26A and 26B is another tip usable for both the PC connector 25 and the APC connector 27, and adopted in a multi-core connector cleaner. Fig. 26A is a perspective view of the tip 33, and Fig. 26B is a side view of the tip 33. The cleaning medium 2 to be used in the tip 33 is a narrow fabric. The width of this narrow fabric is a width capable cleaning a plurality of fibers at the same time. A pad 34 exists below (on the back side of) this narrow fabric, the pad 34 and the optical connector 5 (the PC connector 25 or the APC connector 27) sandwich the narrow fabric, and the optical connector 5 is cleaned by winding up the narrow fabric. That surface of the pad 34, which abuts against the optical connector 5, slightly inclines so that both the PC connector 25 and the APC connector 27 can be cleaned. This inclination is normally set at an angle between an inclination angle of 0° of the PC connector 25 and an inclination angle of 8° of the APC connector 27. As a consequence, a slight gap is formed between the optical connector 5 and the pad 34 regardless of whether the PC connector 25 or the APC connector 27 abuts against the pad 34. Since, however, the narrow fabric as the cleaning medium 2 is sufficiently thick and soft, no gap is formed between the narrow fabric and the optical connector 5. This makes it possible to clean both the PC connector 25 and the APC connector 27 without any problem.

### Disclosure of Invention

### Problem to be Solved by the Invention

The tip 33 shown in Fig. 26 can clean both the PC connector 25 and the APC connector 27 because the relative positions of the multi-core connector and the tip 33 are always the same. However, the relative positions are uncertain in the single-core connector, and only a moderate angle is given between the connector and that surface of the tip 33, which abuts against the connector. In the worst case, however, this moderate angle is added to the angle of the APC connector 27, and a large gap is formed between the fiber portion and the cleaning medium 2.

Accordingly, the conventional tip cannot implement an optical connector cleaning tool having no rotation mechanism and capable of cleaning the single-core connector without designating the relative positions.

It is an object of the present invention to provide an optical connector cleaning tool capable of properly cleaning both the PC connector and the APC connector without using a rotation mechanism for rotating a tip.

### Means of Solution to the Problem

To achieve this object, an optical connector cleaning tool according to the present invention is an optical connector cleaning tool including a tip for cleaning in a distal end portion, the tip having a distal end face in which a delivery hole from which a cleaning medium is delivered and a winding hole into which the cleaning medium is returned are formed, and having an outer circumferential surface, wherein the distal end face includes a first inclined surface and a second inclined surface forming the distal end portion of the tip into a mountain shape in cross section when viewed in a direction perpendicular to a direction in which the delivery hole and the winding hole are arranged and perpendicular to an axis of the tip, and a convex curved surface connecting the outer circumferential surface to the first inclined surface and the second inclined surface, the first inclined surface crosses the axis, and inclines to a virtual horizontal line perpendicular to the axis at an angle smaller than an inclination angle of a distal end face of an APC connector, the second inclined surface is formed such that a ridgeline forming a distal end of the tip is positioned between the axis and the winding hole, and inclines to the virtual horizontal line at an angle not less than the inclination angle and in a direction opposite to the first inclined surface, and the convex curved surface inclines to the virtual horizontal line at an angle not less than the inclination angle when viewed in a direction perpendicular to the axis.

### Effect of the Invention

According to the present invention, cleaning can be performed regardless of whether the projecting portion of the APC connector is on the delivery side or the winding side of the cleaning medium in the tip, or in other directions. Also, since the inclination angle of the first inclined surface as a cleaning portion is smaller than the inclination angle of the distal end face of the APC connector, the cleaning performance can be secured for the PC connector having a flat distal end face.

Accordingly, it is possible to provide an optical connector cleaning tool capable of properly cleaning both the PC connector and the APC connector without using a rotation mechanism for rotating a tip.

### Brief Description of Drawings

Fig. 1 is a plan view of an optical connector cleaning tool according to the present invention;
Fig. 2 is a plan view of a tip;
Fig. 3 is a front view of the tip;
Fig. 4 is a side view of the tip;
Fig. 5 is a front view showing main portions of the tip;
Fig. 6 is a perspective view of the tip;
Fig. 7 is a front view showing a cleaning state;
Fig. 8 is a front view showing the cleaning state;
Fig. 9 is a side view showing the cleaning state;
Fig. 10 is a plan view showing a ferrule end face;
Fig. 11 is a plan view of the tip;
Fig. 12 is a plan view of the tip;
Fig. 13 shows photomicrographs showing the results of cleaning;
Fig. 14 is a plan view of a conventional optical connector cleaning tool;
Fig. 15 is a plan view of a conventional optical connector cleaning tool;
Fig. 16 is a plan view of a conventional optical connector cleaning tool;
Fig. 17A is a perspective view showing a conventional tip;
Fig. 17B is a perspective view showing the conventional tip;
Fig. 18A is a perspective view showing a form of cleaning;
Fig. 18B is a side view showing the form of cleaning;
Fig. 19A is a perspective view showing a form of cleaning;
Fig. 19B is a side view showing the form of cleaning;
Fig. 20 is a side view showing the distal end portion of an APC connector and the distal end portion of a tip in a cleaning state;
Fig. 21 is a photomicrograph showing a fiber and its periphery after cleaning;
Fig. 22 is a side view showing the distal end portion of an APC connector and the distal end portion of a tip in a cleaning state;
Fig. 23 is a photomicrograph showing a fiber and its periphery after cleaning;
Fig. 24A is a perspective view showing a conventional tip;
Fig. 24B is a side view showing the conventional tip;
Fig. 25A is a perspective view showing a conventional tip;
Fig. 25B is a side view showing the conventional tip;
Fig. 26A is a perspective view showing a conventional tip; and
Fig. 26B is a side view showing the conventional tip.

### Best Mode for Carrying Out the Invention

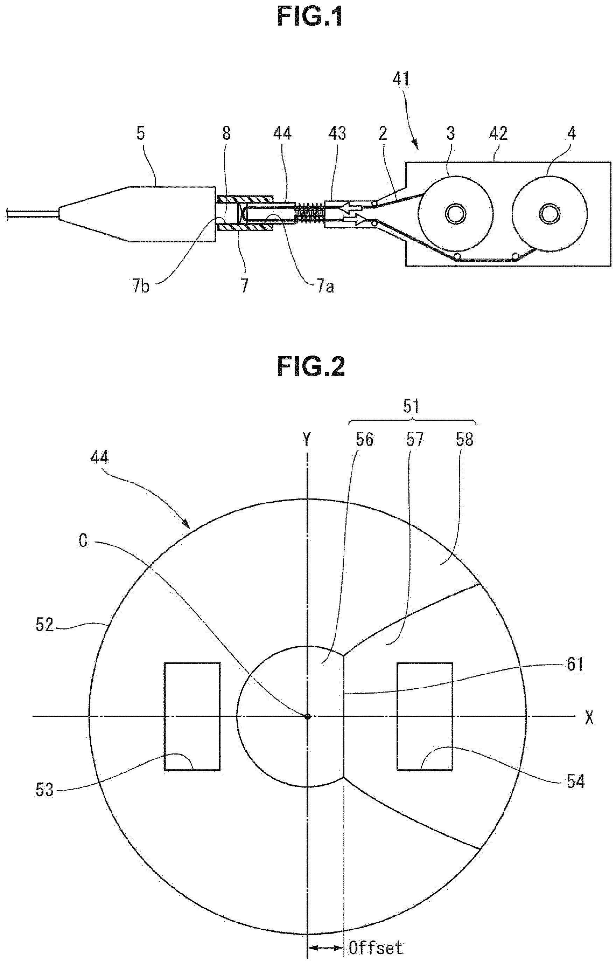

An embodiment of an optical connector cleaning tool according to the present invention will be explained in detail below with reference to Figs. 1 to 13. In these drawings, the same reference numerals as in Figs. 14 to 26B denote the same or equal members, and a detailed explanation thereof will be omitted.

An optical connector cleaning tool 41 shown in Fig. 1 is used to clean the distal end face of a single-core optical connector such as a PC connector 25 or an APC connector 27. The optical connector cleaning tool 41 includes a housing 42 to be held by the user, and a tip 44 for cleaning formed in a distal end portion 43 projecting from the housing 42. The housing 42 houses a supply bobbin 3 and a take-up bobbin 4 on each of which a cleaning medium 2 is wound. As the cleaning medium 2, it is possible to use a bundle of threads or a narrow fabric that is conventionally known well.

The cleaning medium 2 is guided from the supply bobbin 3 to the tip 44, returned at the distal end of the tip 44, and wound on the take-up bobbin 4. The take-up bobbin 4 is driven by a driving mechanism (not shown), and rotated by a predetermined rotation amount during cleaning. When the take-up bobbin 4 rotates, the cleaning medium 2 is pulled out from the supply bobbin 3 and passed through the distal end of the tip 44. Therefore, when the take-up bobbin 4 rotates in a state in which the distal end of the tip 44 is pushed against the distal end face of an optical connector 5, the distal end of the optical connector 5 is wiped and cleaned by the cleaning medium 2. The optical connector 5 is a single-core connector including the PC connector 25 and the APC connector 27.

The tip 44 is so formed as to fit in one end portion of an optical connector adapter 7. The optical connector 5 is cleaned in a state in which the tip 44 of the optical connector cleaning tool 41 is inserted into a hole 7a of the optical connector adapter 7, the optical connector 5 is inserted into a hole 7b, and the cleaning medium 2 is in contact with the distal end face of the optical connector 5.

As shown in Figs. 2 to 6, the tip 44 is formed in an almost cylindrical shape as a whole, and has a distal end face 51 and an outer circumferential surface 52. The distal end face 51 will be described later. The outer circumferential surface 52 is formed into a shape that fits in the holes 7a and 7b of the optical connector adapter 7.

A delivery hole 53 and a winding hole 54 are formed in the distal end face 51. The delivery hole 53 is a hole from which the cleaning medium 2 supplied from the supply bobbin 3 is delivered. The winding hole 54 is a hole into which the cleaning medium 2 used in cleaning is returned. The configuration of the tip 44 will be explained below by assuming that a virtual axis extending in a direction from the delivery hole 53 to the winding hole 54 by passing through the center of the tip 44 and perpendicular to an axis C of the tip 44 is an X-axis (see Fig. 2), and a virtual axis extending through the center of the tip 44 and perpendicular to the axis C and the X-axis is a Y-axis. The direction (Y-axis direction) in which the Y-axis extends is equivalent to "a direction perpendicular to the direction in which the delivery hole and the winding hole are arranged and perpendicular to the axis of the tip" mentioned in the present invention.

The greatest features of the tip 44 are that the tip 44 is formed into a mountain shape in the direction (X-axis direction) in which the X-axis extends, and the top of a mountain 55 is not positioned in the center (axial center) of the tip 44 but shifted (offset) to the winding side of the cleaning medium 2 (i.e., from the center of the tip 44 to a side on which the winding hole 54 is positioned in the X-axis direction).

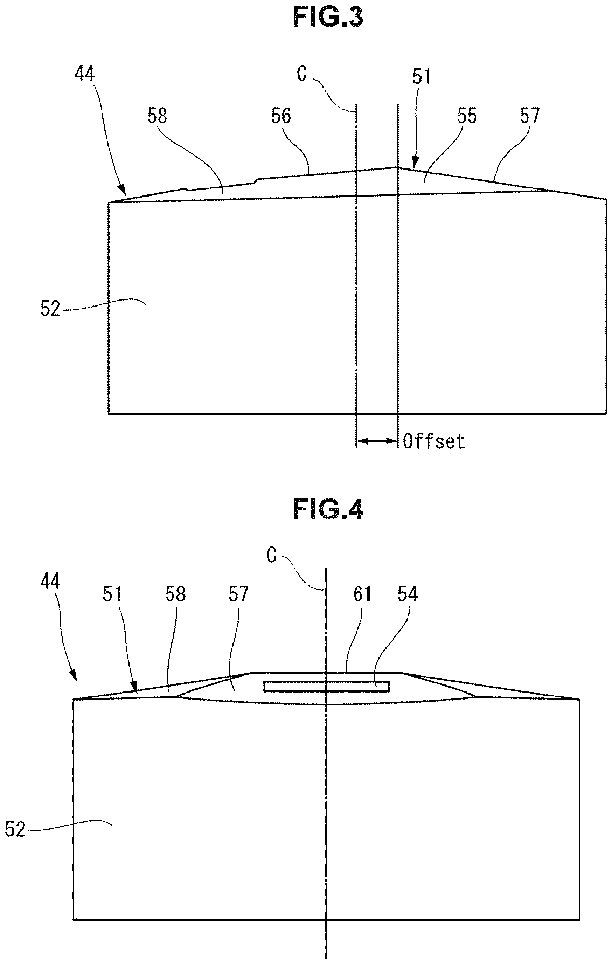

When the tip 44 is viewed in the Y-axis direction as shown in Fig. 3, the distal end face 51 of the tip 44 includes a first inclined surface 56 and a second inclined surface 57 that form the distal end portion of the tip 44 into a mountain shape in cross section, and a convex curved surface 58 that connects the outer circumferential surface 52 of the tip 44 to the first inclined surface 56 and the second inclined surface 57.

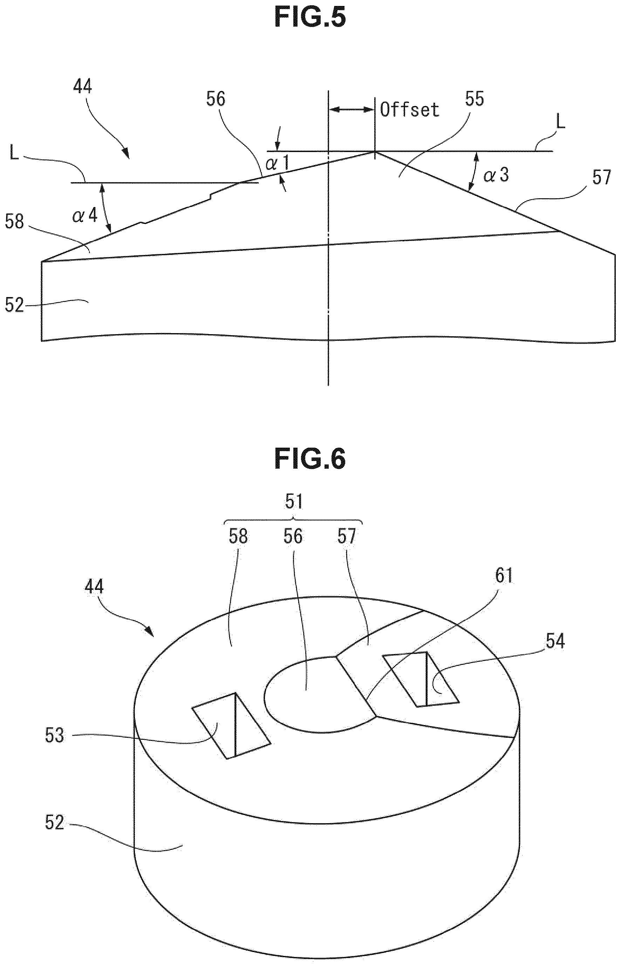

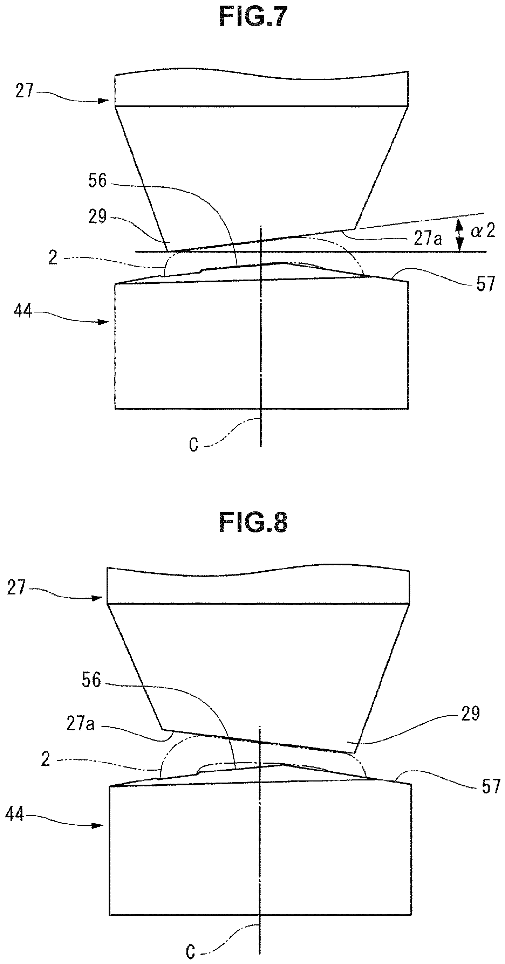

The first inclined surface 56 crosses the axis C of the tip 44, as shown in Figs. 2 and 3, and inclines at a predetermined angle α1 to a virtual horizontal line L perpendicular to the axis C, as shown in Fig. 5. The angle α1 is smaller than an inclination angle α2 of a distal end face 27a (see Fig. 7) of the APC connector 27. The inclination angle α2 of the APC connector 27 is 8°. The inclination angle α1 of the first inclined surface 56 according to this embodiment is 4° ± 1°. This angle is almost intermediate between the inclination angle (0°) of the distal end face of the PC connector 25 and the inclination angle α2 (8°) of the distal end face 27a of the APC connector 27. The first inclined surface 56 inclining at about 4° is a surface that pushes the cleaning medium 2 against the connector and is an area in which the connector is cleaned.

The width of the first inclined surface 56 in the Y-axis direction is desirably set such that the width is equal to the width of the cleaning medium 2 + α and is not unnecessarily large. Note that if the amount of threads of the cleaning medium 2 is sufficient, the width of the cleaning medium 2 can also be equal to the width of the delivery hole 53 or the winding hole 54 in the Y-axis direction. α of the width of the cleaning medium 2 + α can be regarded as, e.g., an allowance for expansion of the cleaning medium 2. In this case, the width of the first inclined surface 56 in the Y-axis direction becomes larger than the width of the cleaning medium 2 by a predetermined allowance for expansion of the cleaning medium 2. The first inclined surface 56 according to this embodiment is an inclined flat surface and, as shown in Fig. 2, formed into a circular shape that forms a straight line at the boundary with the second inclined surface 57 when viewed in the axial direction of the tip 44.

The boundary between the first inclined surface 56 and the second inclined surface 57, i.e., the top of the mountain 55 as the distal end of the tip 44 is offset in a +X direction from the axis C of the tip 44 and positioned between the axis C of the tip 44 and the winding hole 54.

An offset line 61 forming the ridgeline at the top of the mountain 55 is an almost straight line extending in the Y-axis direction. As shown in Fig. 5, the second inclined surface 57 formed on the winding side of the offset line 61 inclines at an angle α3 to the virtual horizontal line L in a direction opposite to the first inclined surface 56. The angle α3 is equal to or larger than the inclination angle α2 (8°) of the APC connector 27.

The second inclined surface 57 according to this embodiment is an inclined flat surface and, as shown in Figs. 2 and 6, extends into an almost fan shape from the offset line 61 to the outer circumferential edge of the tip 44. The winding hole 54 is formed in the second inclined surface 57.

The convex curved surface 58 connecting the outer circumferential surface 52 of the tip 44 to the first inclined surface 56 and the second inclined surface 57 is formed into a shape obtained by cutting off parts of a cone as the first inclined surface 56 and the second inclined surface 57. As shown in Figs. 2 and 6, the delivery hole 53 is formed in the convex curved surface 58.

As shown in Fig. 5, the convex curved surface 58 according to this embodiment inclines at an angle α4 to the virtual horizontal line L when viewed in the Y-axis direction perpendicular to the axis C. The angle α4 is equal to or larger than the inclination angle α2 of the distal end face 51 of the APC connector 27.

When cleaning the APC connector 27 by using the optical connector cleaning tool 41 having the tip 44 constructed as described above, the APC connector 27 is inserted into the hole 7b of the optical connector adapter 7, and the tip 44 is inserted into the hole 7a. In this state, a part of the distal end face 51 of the tip 44 faces the projecting portion 29 of the APC connector 27.

When the delivery side of the cleaning medium 2 in the tip 44 faces the projecting portion 29 of the APC connector 27, as shown in Fig. 7, the cleaning medium 2 is sandwiched between the first inclined surface 56 and the projecting portion 29 and flattened near the delivery hole 53.

Since the first inclined surface 56 inclines at the angle α1, however, the cleaning medium 2 moves almost along the distal end face 27a of the APC connector 27 when taken up. This movement of the cleaning medium 2 along the distal end face 51 continues to the boundary between the first inclined surface 56 and the second inclined surface 57. Even when the projecting portion 29 comes to the delivery side, therefore, it is possible to reduce a gap to be formed between the projecting portion 29 and the cleaning medium 2 in the central portion of a fiber, so a region where a gap that is large enough to obstruct cleaning is formed can be moved away from the central portion in the +X direction. Consequently, the distal end face 27a of the APC connector 27 is sufficiently cleaned.

When the winding side of the cleaning medium 2 in the tip 44 faces the projecting portion 29 of the APC connector 27, as shown in Fig. 8, the projecting portion 29 faces the second inclined surface 57, and this makes it possible to prevent a gap from being formed between the connector and the cleaning medium 2 in the central portion of the tip 44. In this case, the cleaning medium 2 is not flattened but moves in an expanded state between the first inclined surface 56 and the distal end face 27a of the APC connector 27. Accordingly, the distal end face 27a of the APC connector 27 is sufficiently cleaned.

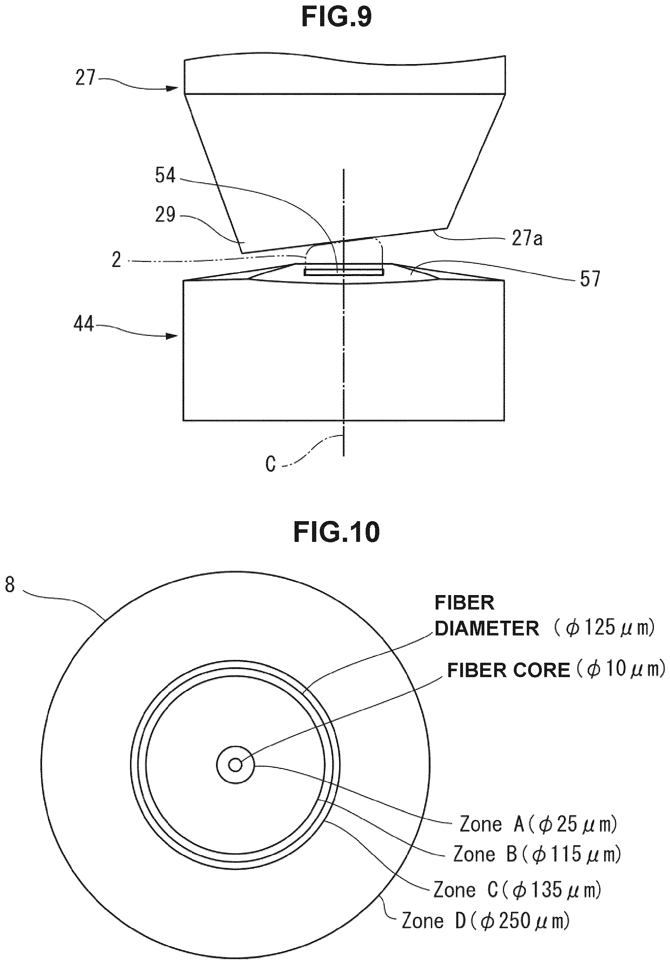

When a portion that is neither the delivery side nor the winding side of the cleaning medium 2 in the tip 44 faces the projecting portion 29 of the APC connector 27, as shown in Fig. 9, interference between the projecting portion 29 and the tip 44 can be avoided by the inclined convex curved surface 58, so the cleaning medium 2 comes in contact with the central portion of the APC connector 27. Therefore, the distal end face 27a of the APC connector 27 is sufficiently cleaned.

As described above, the tip 44 can sufficiently clean the APC connector 27 regardless of whether the projecting portion 29 of the APC connector 27 is on the delivery side, on the winding side, or in another direction.

When cleaning the PC connector 25, the first inclined surface 56 pushes the cleaning medium 2 against the distal end face of the PC connector 25. Since the first inclined surface 56 inclines at the angle α1 smaller than the inclination angle α2 of the APC connector 27, the cleaning performance can be secured even for the PC connector 25 having a flat distal end face.

Accordingly, this embodiment can provide an optical connector cleaning tool capable of properly cleaning both the PC connector and the APC connector without using a rotation mechanism for rotating a tip.

Next, a practical design of the present invention will be explained. An SC connector and an LC connector are often used the field of communication. The SC connector uses a ferrule having a diameter of 2.5 mm, and the LC connector uses a ferrule having a diameter of 1.25 mm. Although not shown, these connectors can connect fibers having a diameter of 125 µm and a core diameter of only 10 µm by accurately aligning them by butting the end faces of ferrules against each other from the two ends of a sleeve (cylindrical pipe) formed inside an optical connector adapter and having almost the same diameter as the ferrules. More specifically, the ferrules are optically coupled with each other with low loss by a physical contact method called physical contact. The purpose of the optical connector cleaning tool is to secure good optical coupling by wiping off dust and oil in an area necessary for the physical contact. That is, a range to be cleaned is predetermined, and the optical connector cleaning tool is so designed as to be able to properly clean this range.

This cleaning range is standardized, as shown in Fig. 10, and the range of the physical contact exists in a range having a diameter of 250 µm indicated by Zone D in Fig. 10. The optical connector cleaning tool is required to reliably clean this Zone D.

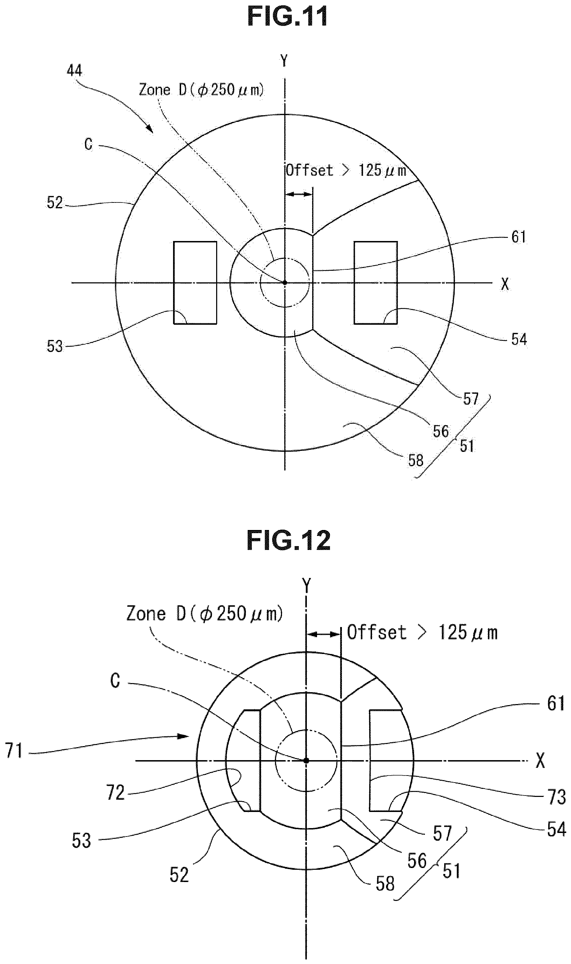

Fig. 11 shows a design example when applying the present invention to a connector using a ferrule having a diameter of 2.5 mm such as the SC connector. The same reference numerals as in Figs. 2 to 5 denote the same or equal members in Fig. 11, and a detailed explanation thereof will be omitted.

When cleaning a connector using a ferrule having a diameter of 2.5 mm, the offset line 61 on the ridge is set in a position spaced apart by more than 125 µm from the Y-axis so that a cleaning region (the first inclined surface 56) inclining at about 4° in the central portion contains a φ250-µm region having the same size as that of Zone D. In addition, as described earlier, to reduce the gap in the central portion when cleaning the APC connector 27, the width of the offset line 61 or the cleaning region (the first inclined surface 56) in the Y direction is set to be slightly larger than the width of the cleaning medium 2, and is not unnecessarily increased. Note that the first inclined surface 56 as the cleaning region is indicated by a circle in Fig. 11, but the first inclined surface 56 may also be a rectangular or the like as long as Zone D is contained.

Fig. 12 shows a design example when applying the present invention to the optical connector 5 using a ferrule having a diameter of 1.25 mm such as the LC connector. The same reference numerals as in Figs. 2 to 5 denote the same or equal members in Fig. 11, and a detailed explanation thereof will be omitted. The concept of the design is the same as that for the tip 44 for a ferrule having a diameter of 2.5 mm. When using a ferrule having a diameter of 2.5 mm, however, the distance between the holes for passing threads (the interval between the delivery hole 53 and the winding hole 54) can be made larger than the width of the cleaning medium 2. On the other hand, when using a tip 71 for a ferrule having a diameter of 1.25 mm, the distance between the holes for passing threads is smaller than the width of the cleaning medium 2. Therefore, the point of the design is how to increase this distance. In this design, the cleaning range is secured by increasing the distance between the delivery hole 53 and the winding hole 54 by changing the shapes of these holes. That is, one side portion of the delivery hole 53 which is closer to the outer circumferential surface 52 of the tip 71 is formed by a curved surface 72 following the outer circumferential surface 52 of the tip 44, so that the delivery hoe 53 is located as outward as possible. The winding hole 54 is formed by a trench 73 that opens to the outer circumferential surface 52 of the tip 71. Note that the configuration of the delivery hole 53 and the winding hole 54 like this is also applicable to the tip 44 for a ferrule having a diameter of 2.5 mm.

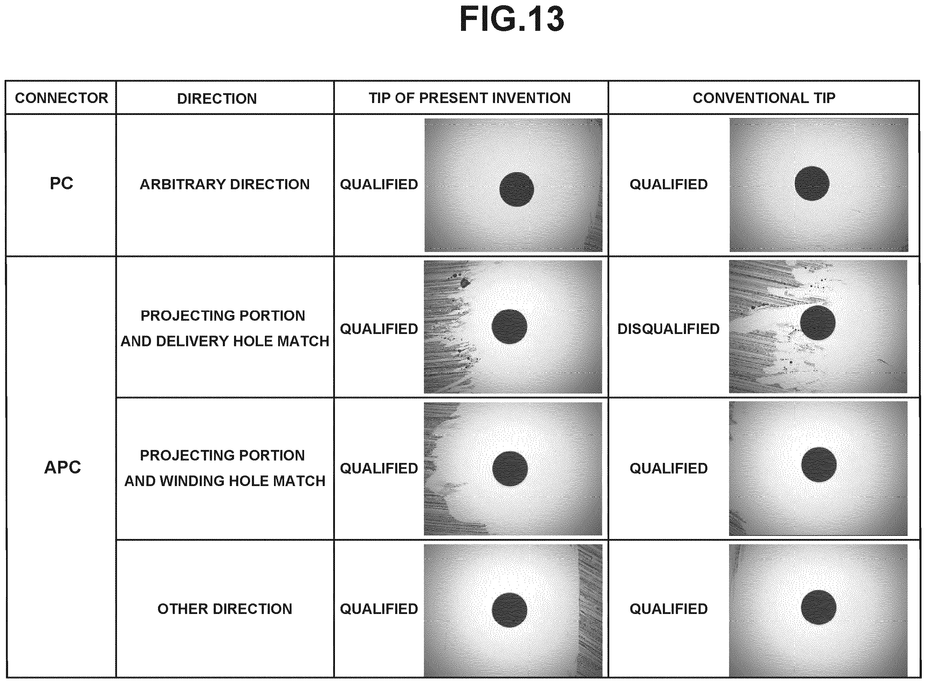

Results as shown in Fig. 13 were obtained when cleaning the PC connector 25 and the APC connector 27 by using the tip 44 according to the present invention configured as described above and a conventional tip 6. The connectors used in this cleaning have a ferrule having a diameter of 2.5 mm. The conventional tip 6 used in this cleaning has an edge surface 31 shown in Fig. 24. Fig. 13 shows images of cleaning surfaces as the cleaning results. Each cleaning result is an image obtained by capturing a photomicrograph after attaching a hand grease to the whole ferrule end face to be cleaned and wiping the ferrule end face by using the optical connector cleaning tool 41.

As shown in Fig. 13, the tip 44 of the present invention was able to properly clean the area inside Zone D regardless of the direction, but the conventional tip 6 left unwiped portions when the direction of the projecting portion 29 of the APC connector 27 matched the delivery hole 53.

In the tips 44 and 71 according to the embodiment described above, each of the second inclined surface 57 and the convex curved surface 58 is formed into a shape that is connected to the outer circumferential surface 52. Even in the tips 44 and 71, however, the edge surface 31 can be formed around the tip in order to facilitate insertion into the holes 7a and 7b of the optical connector adapter 7, like the conventional tip 6 shown in Fig. 24.

### Explanation of the Reference Numerals and Signs

2...cleaning medium, 27...APC connector, 27a...distal end face, 41...optical connector cleaning tool, 44...tip, 51...distal end face, 52...outer circumferential surface, 53...delivery hole, 54...winding hole, 56...first inclined surface, 57...second inclined surface, 58... convex curved surface, 61...offset line (ridgeline), C...axis, L...virtual horizontal line

## Claims

1. An optical connector cleaning tool including a tip for cleaning in a distal end portion, the tip having a distal end face and an outer circumferential surface, the distal end face having a delivery hole from which a cleaning medium is delivered and a winding hole into which the cleaning medium is returned formed, wherein
the distal end face includes:
a first inclined surface and a second inclined surface forming the distal end portion of the tip into a mountain shape in cross section when viewed in a direction perpendicular to a direction in which the delivery hole and the winding hole are arranged and perpendicular to an axis of the tip; and
a convex curved surface connecting the outer circumferential surface to the first inclined surface and the second inclined surface, wherein
the first inclined surface crosses the axis, and inclines to a virtual horizontal line perpendicular to the axis at an angle smaller than an inclination angle of a distal end face of an APC connector,
the second inclined surface is formed such that a ridgeline forming a distal end of the tip is positioned between the axis and the winding hole, and inclines to the virtual horizontal line at an angle not less than the inclination angle and in a direction opposite to the first inclined surface, and
the convex curved surface inclines to the virtual horizontal line at an angle not less than the inclination angle when viewed in a direction perpendicular to the axis.

2. The optical connector cleaning tool according to claim 1, wherein in the direction perpendicular to the direction in which the delivery hole and the winding hole are arranged and perpendicular to the axis of the tip, a width of the first inclined surface is larger than a width of the cleaning medium by a predetermined allowance for expansion of the cleaning medium.

3. The optical connector cleaning tool according to claim 1 or 2, wherein
one side portion of the delivery hole closer to the outer circumferential surface of the tip is formed by a curved surface following the outer circumferential surface, and
the winding hole is formed by a trench that opens to the outer circumferential surface of the tip.
